# EUROPEAN PATENT APPLICATION

(11) **EP 4 733 366 A1**
(43) Date of publication of application: **29.04.2026**
(21) Application number: 24832075.6
(22) Date of filing: 28.06.2024
(51) Int. Cl.: C09J 123/26, C09J 123/02

(54) **LAYER, AUTOMOBILE INTERIOR MEMBER, AND METHOD FOR PRODUCING AUTOMOBILE INTERIOR MEMBER**

(30) Priority: 30.06.2023 JP 2023108841
(71) Applicant: Inoac Technical Center Co., Ltd., Nagoya-shi, Aichi 450-0003 (JP)
(72) Inventor: HAYAKAWA, Hiroki, Hadano-shi, Kanagawa 259-1304 (JP)
(74) Representative: WSL Patentanwälte Partnerschaft mbB
(86) International application number: PCT/JP2024/023456
(87) International publication number: WO 2025/005217

(57) **Abstract**

Provided are a layer formed using a hot-melt adhesive and having excellent performance, an automobile interior member including the layer, and a method for manufacturing the automobile interior member.

An embodiment of the present invention provides a layer formed of an aggregate of fibrous hot-melt adhesives, in which the aggregate of the hot-melt adhesives contains an acid-modified polypropylene resin.

## Description

### Technical Field

The present invention relates to a layer, an automobile interior member, and a method for manufacturing the automobile interior member.

### Background Art

A hot-melt adhesive can fix a bonding object only by being cooled and solidified after pressure bonding, and is used in various fields because of high workability.

In manufacture of a laminate used for automobile interior or the like, for example, an olefin hot-melt adhesive disclosed in Patent Literature 1 can be used.

### Citation List

### Patent Literature

Patent Literature 1: WO 2015/111488 A

### Summary of Invention

### Technical Problem

However, a layer obtained using a hot-melt adhesive according to prior art does not provide sufficient performance.

Therefore, an object of the present invention is to provide a layer formed using a hot-melt adhesive and having excellent performance, an automobile interior member including the layer, and a method for manufacturing the automobile interior member.

### Solution to Problem

An aspect of the present invention is a layer. The layer is a layer formed of an aggregate of fibrous hot-melt adhesives. The aggregate of the hot-melt adhesives contains an acid-modified polypropylene resin.

Another aspect of the present invention is an automobile interior member including the layer of the above aspect.

Still another aspect of the present invention is a method for manufacturing the automobile interior member. The manufacturing method includes a step of forming a resin fiber adhesive layer by directly spray-applying a hot-melt adhesive onto a substrate. The hot-melt adhesive is an olefin-based hot-melt adhesive containing a polyolefin and an acid-modified polypropylene resin.

Still another aspect of the present invention is a method for manufacturing the automobile interior member. The manufacturing method includes a step of forming a resin fiber adhesive layer by directly spray-applying an olefin-based hot-melt adhesive onto a substrate by an automatically controlled application apparatus.

### Advantageous Effects of Invention

According to the present invention, it is possible to provide a layer formed using a hot-melt adhesive and having excellent performance, an automobile interior member including the layer, and a method for manufacturing the automobile interior member.

### Brief Description of Drawings

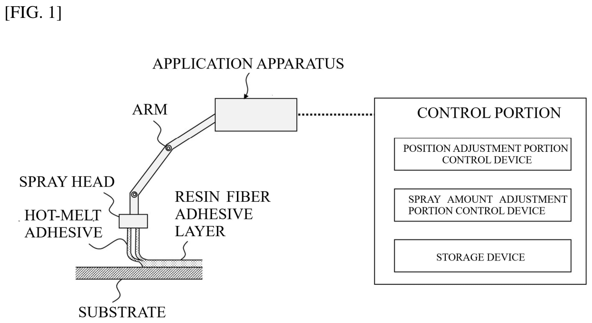

[Fig. 1] Fig. 1 illustrates a conceptual diagram and a block diagram according to an example of an automatically controlled application apparatus.

### Description of Embodiments

In the present specification, when a plurality of upper limit values and a plurality of lower limit values are described separately, it is to be understood that all numerical ranges that can be set by freely combining these upper limit values and lower limit values are described in the present specification.

In the following, when a compound is described, it is to be understood that an isomer thereof is also described at the same time.

In the present invention, a number average molecular weight or a weight average molecular weight is measured using gel permeation chromatography.

In the present invention, it is to be understood that a softening point is measured in accordance with JIS K 6863:1994 "Test Method for Softening Point of Hot Melt Adhesive". Furthermore, in the present invention, a melting point refers to a melting peak temperature obtained by DSC.

The technique according to the present disclosure relates to a layer formed of an aggregate of fibrous hot-melt adhesives. In other words, the technique according to the present disclosure relates to a resin fiber layer formed of a fibrous hot-melt adhesive. According to still another expression, the technique according to the present disclosure relates to a laminate including a substrate and a resin fiber layer formed of a fibrous hot-melt adhesive.

Hereinafter, a layer formed of an aggregate of fibrous hot-melt adhesives may be simply referred to as a resin fiber adhesive layer.

Hereinafter, a hot-melt adhesive constituting a resin fiber adhesive layer, a structure of the resin fiber adhesive layer, an application or an application site of the resin fiber adhesive layer, and a method for manufacturing the resin fiber adhesive layer will be described.

### <<<<Hot-melt adhesive>>>>

### <<<Component of hot-melt adhesive>>>

The hot-melt adhesive preferably contains an acid-modified polypropylene. In other words, the resin fiber adhesive layer preferably contains an acid-modified polypropylene.

The hot-melt adhesive preferably contains a polyolefin. In other words, the resin fiber adhesive layer preferably contains a polyolefin. Hereinafter, a hot-melt adhesive containing a polyolefin may be referred to as an olefin-based hot-melt adhesive. In other words, one of preferable forms of the hot-melt adhesive according to the present disclosure is an olefin-based hot-melt adhesive.

The hot-melt adhesive may contain other components.

Each component will be described below.

### <<Acid-modified polypropylene>>

The acid-modified polypropylene is obtained by, for example, graft-polymerizing polypropylene with an unsaturated carboxylic acid or a derivative thereof.

By using the acid-modified polypropylene, it is possible to provide a hot-melt adhesive which has a sufficient open time and is excellent in high-temperature peeling strength and the like. In addition, such an effect can be further enhanced particularly by using the above-described polyolefin and the acid-modified polypropylene in combination.

Examples of the unsaturated carboxylic acid include maleic acid, fumaric acid, itaconic acid, and acrylic acid. Examples of derivatives of the unsaturated carboxylic acid include maleic anhydride, itaconic anhydride, methyl acrylate, ethyl acrylate, butyl acrylate, methyl methacrylate, ethyl methacrylate, and a maleic acid monoethyl ester.

The acid-modified polypropylene is preferably maleic acid-modified polypropylene or maleic anhydride-modified polypropylene, and particularly preferably maleic acid-modified polypropylene from the viewpoint of enhancing high-temperature peeling strength and wettability at the time of application.

The acid-modified polypropylene preferably has an acid value satisfying 1 to 100 mgKOH/g or an acid content satisfying 0.5 to 10 wt%. The acid value can be measured in accordance with JIS K 0070.

The acid-modified polypropylene can have a melting point of, for example, 60 to 180°C or 70 to 170°C.

The acid-modified polypropylene can have a weight average molecular weight of, for example, 5,000 to 200,000 or 7,500 to 100,000.

A content M_{B} of the acid-modified polypropylene in the hot-melt adhesive is preferably 0.1 mass% or more, 1 mass% or more, 2 mass% or more, or 3 mass% or more, and is preferably 20 mass% or less, 15 mass% or less, or 12 mass% or less.

The acid-modified polypropylene is not limited to one obtained by graft-polymerizing polypropylene with an unsaturated carboxylic acid or a derivative thereof as described above, and can be a conventionally known one. For example, the acid-modified polypropylene may be one in which an end portion of polypropylene is acid-modified. Examples of those in which an end portion of polypropylene is acid-modified include those in which an end double bond portion of polypropylene containing double bonds at both ends thereof (for example, those obtained by thermally decomposing polypropylene) is acid-modified with an unsaturated carboxylic acid or a derivative thereof. As described above, in the acid-modified polypropylene in which an end portion is acid-modified, a decrease in molecular weight at the time of acid modification is suppressed (an appropriate molecular weight range is easily maintained), and therefore it is possible to suppress a decrease in strength, and it is possible to improve adhesiveness when a different type of material is bonded thereto, and the like.

### <<Polyolefin>>

The polyolefin is not particularly limited, and a conventionally known polyolefin can be used. Examples of the polyolefin include polyethylene, polypropylene, polybutene-1, a polypropylene copolymer (for example, an ethylene-propylene copolymer), an ethylene-α-olefin copolymer, and a polymer blend thereof.

The polyolefin is preferably a mixture of a polyolefin having a relatively high softening point and a polyolefin having a relatively low softening point. More specifically, the polyolefin preferably contains a polyolefin (A1) having a softening point of 130°C or higher and a polyolefin (A2) having a softening point of lower than 130°C.

The softening point of the polyolefin (A1) may be 135°C or higher, 140°C or higher, 145°C or higher, 150°C or higher, or 155°C or higher. The softening point of the polyolefin (A1) may be lower than 180°C, lower than 175°C, lower than 170°C, or lower than 165°C.

The softening point of the polyolefin (A2) may be lower than 128°C, lower than 125°C, lower than 123°C, or lower than 120°C. The softening point of the polyolefin (A2) may be 100°C or higher, 105°C or higher, 110°C or higher, or 115°C or higher.

A difference between the softening point of the polyolefin (A1) and the softening point of the polyolefin (A2) needs only to be more than 0°C, but is preferably 5°C or more, 10°C or more, 15°C or more, 20°C or more, 25°C or more, or 30°C or more, and is preferably 55°C or less, 50°C or less, or 45°C or less.

By setting the softening point of the polyolefin (A1) and the softening point of the polyolefin (A2) within such ranges, a hot-melt adhesive excellent in viscosity characteristics and high-temperature peeling strength can be obtained.

The softening point of the polyolefin can be adjusted by changing molecular weight, the type of monomer used, a composition ratio, and the like.

The content of the entire polyolefin (the total content of the polyolefin (A1) and the polyolefin (A2)) in the hot-melt adhesive can be, for example, 50 mass% or more, 55 mass% or more, 60 mass% or more, or 65 mass% or more, and can be 90 mass% or less, 85 mass% or less, 80 mass% or less, or 75 mass% or less.

The content M_{A1} of the polyolefin (A1) in the hot-melt adhesive is preferably 0.1 mass% or more, 1 mass% or more, 5 mass% or more, 8 mass% or more, or 10 mass% or more, and is preferably 30 mass% or less, 25 mass% or less, or 20 mass% or less.

The content M_{A2} of the polyolefin (A2) in the hot-melt adhesive is preferably 0.1 mass% or more, 1 mass% or more, 10 mass% or more, 30 mass% or more, 40 mass% or more, or 50 mass% or more, and is preferably 80 mass% or less, 70 mass% or less, or 60 mass% or less.

In the hot-melt adhesive, a ratio [M_{A2}/M_{A1}] of the content M_{A2} of the polyolefin (A2) to the content M_{A1} of the polyolefin (A1) is preferably more than 1.0, 1.5 or more, 2.0 or more, 2.5 or more, or 3.0 or more, and is preferably 8.0 or less, 7.0 or less, 6.0 or less, 5.5 or less, 5.0 or less, 4.5 or less, or 4.0 or less.

By setting the contents of the polyolefin (A1) and the polyolefin (A2) within such ranges, a hot-melt adhesive excellent in viscosity characteristics and high-temperature peeling strength can be obtained.

In the hot-melt adhesive, M_{A2}/(M_{A1}+M_{B}) is preferably more than 1, 1.5 or more, or 2 or more, and is preferably 5 or less, 4 or less, or 3 or less. By setting the M_{A2}/(M_{A1}+M_{B}) within such a range, viscosity characteristics, high-temperature peeling strength, and the like can be enhanced in a well-balanced manner while an open time is appropriate.

The polyolefin (A1) and the polyolefin (A2) may have the same type of monomer or different types of monomers. The polyolefin (A2) preferably contains polybutene-1.

The polyolefin is preferably a poly α-olefin, and more preferably an amorphous poly α-olefin from the viewpoint of viscosity characteristics and the like.

The poly α-olefin refers to a polymer obtained by polymerizing an α-olefin. The amorphous poly α-olefin refers to one having no clear melting point among poly α-olefins.

As the amorphous poly α-olefin, known ones, for example, those described in JP 6001685 B2 and JP 3153648 B2 can be used. The amorphous poly α-olefin can be, for example, an amorphous olefin-based resin obtained by polymerizing (or copolymerizing) propylene, ethylene, and 1-butene singly or in combination of two or more of them.

Only one of the polyolefin (A1) and the polyolefin (A2) may be a poly α-olefin or an amorphous poly α-olefin, but both the polyolefin (A1) and the polyolefin (A2) are preferably poly α-olefins or amorphous poly α-olefins.

A weight average molecular weight of the polyolefin (or the polyolefin (A1) and the polyolefin (A2)) is not particularly limited as long as the effect of the present disclosure is not impaired, but is preferably, for example, 10,000 to 200,000, 15,000 to 150,000, or 20,000 to 100,000. By setting the weight average molecular weight of the polyolefin within such a range, a hot-melt adhesive excellent in viscosity characteristics and the like can be obtained.

The polyolefin (or the polyolefin (A1) and the polyolefin (A2)) preferably has a tensile strength of 1.0 MPa or more, 2.0 MPa or more, or 3.0 MPa or more. An upper limit value of the tensile strength is, for example, 50 MPa, 40 MPa, 30 MPa, or 20 MPa. The tensile strength is, for example, a value obtained by performing a test at a test speed of 5 mm/min in accordance with ASTM D638.

### <<Other components>>

Examples of other components include various additives such as a tackifier, an antioxidant, an antiaging agent, a filler, a plasticizer, a pigment, a dye, an antistatic agent, a flame retardant, an antibacterial agent, a light stabilizer, a stabilizer, a dispersant, an optical brightener, and a solvent.

When the tackifier is contained as one of the other components, the tackifier may be a natural resin, but is preferably a synthetic resin such as a petroleum resin (hydrocarbon resin), a hydrogenated petroleum resin (hydrocarbon resin), a styrene-based resin, a coumarone-indene-based resin, a phenol-based resin, or a xylene resin. In addition, the tackifier is preferably a (hydrogenated) petroleum resin such as a (hydrogenated) aliphatic (C5-based) petroleum resin, a (hydrogenated) aromatic (C9-based) petroleum resin, a (hydrogenated) copolymer (C5/C9-based) petroleum resin, a (hydrogenated) dicyclopentadiene-based petroleum resin, or an alicyclic saturated hydrocarbon resin, and is particularly preferably a (hydrogenated) aliphatic (C5-based) petroleum resin.

In the hot-melt adhesive, the content of the tackifier can be 5 to 40 mass%, 10 to 35 mass%, or 15 to 30 mass%.

Note that the hot-melt adhesive can be manufactured by a known method. For example, the above-described raw materials need only to be put into a continuous kneader such as a uniaxial or biaxial extruder, or a batch-type kneader such as a roll, a Banbury mixer, a kneader, a planetary mixer, or a high-shear Z-blade mixer, and kneaded for a predetermined time.

The hot-melt adhesive according to the present disclosure is preferably usable for spray application because various conventionally known use methods can be applied thereto, and in particular, the hot-melt adhesive tends to have excellent viscosity characteristics, high-temperature peeling strength, a sufficient open time, and the like. In the present specification, "spray application" refers to spraying a molten hot-melt adhesive in a fibrous form using air pressure. An apparatus and the like that can be used in spray application will be described later.

### <<<Physical properties of hot-melt adhesive>>>

A melt viscosity of the hot-melt adhesive at 200°C is preferably 50,000 mPa•s or less, 30,000 mPa•s or less, 20,000 mPa•s or less, 10,000 mPa•s or less, 8,000 mPa•s or less, 6,000 mPa•s or less, 5,000 mPa•s or less, or 4,000 mPa•s or less.

A melt viscosity of the hot-melt adhesive at 180°C is preferably 100,000 mPa•s or less, 50,000 mPa•s or less, 30,000 mPa•s or less, 20,000 mPa•s or less, 15,000 mPa•s or less, 10,000 mPa•s or less, 8,000 mPa•s or less, or 6,000 mPa•s or less.

A melt viscosity of the hot-melt adhesive at 160°C is preferably 150,000 mPa•s or less, 100,000 mPa•s or less, 60,000 mPa•s or less, 40,000 mPa•s or less, 30,000 mPa•s or less, 15,000 mPa•s or less, 12,000 mPa•s or less, or 11,000 mPa•s or less.

It is to be understood that the melt viscosity is measured for a hot-melt adhesive heated to a predetermined temperature under conditions of a swing angle of 10% and an angular frequency of 1 rad/s using a parallel plate rheometer.

A crystallization temperature of the hot-melt adhesive is preferably 40 to 140°C, 50 to 130°C, or 60 to 125°C. By setting the crystallization temperature within such a range, viscosity characteristics, high-temperature peeling strength, and the like can be enhanced in a well-balanced manner while maintaining an appropriate open time.

It is to be understood that the crystallization temperature is measured in accordance with JIS-K7121.

### <<<<Structure of resin fiber adhesive layer>>>

### <<<Effective area>>>

The resin fiber adhesive layer preferably has an effective area of 40% or more, 50% or more, or 60% or more. The effective area of the resin fiber adhesive layer is measured as an area (%) of a hot-melt adhesive applied portion by automatic area measurement attached to a microscope (VHX-7000 manufactured by KEYENCE CORPORATION). Note that the effective area is measured as an area (%) of a hot-melt adhesive applied portion by automatic area measurement attached to a microscope for a resin fiber adhesive layer obtained by applying 50 g/m² of a hot-melt adhesive onto black paper with a nozzle so as to have a structure (fiber type and fiber density) equivalent to that of a target resin fiber adhesive layer.

The effective area can be adjusted by changing a nozzle (a nozzle diameter, a separation distance between nozzle holes, and the like) at the time of spray application.

### <<<<Application or application site of resin fiber adhesive layer>>>

The resin fiber adhesive layer according to the present embodiment is particularly suitable for an adhesive layer for a polyolefin member such as polyethylene, polypropylene, or an ethylene-propylene copolymer (an adhesive layer used for bonding polyolefin members to each other or bonding a polyolefin member to a member made of a material other than polyolefin). When the polyolefin member is bonded to a member made of a material other than polyolefin, the material other than polyolefin may be any of a natural material, an artificial material, and a composite material thereof, and genuine leather, artificial leather, a fabric material, and the like can be widely used. The polyolefin member is preferably polypropylene.

The resin fiber adhesive layer according to the present disclosure can be suitably used for interior members (interior member fixing) in a conveyance such as an airplane, a ship, or a vehicle (an automobile or a railway vehicle), and can be particularly suitably used for a vehicle interior member. More specifically, the resin fiber adhesive layer for a vehicle interior member can be used for fixing a skin of an automobile interior member (an instrument panel, a pillar, a door trim, or the like). In other words, the resin fiber adhesive layer according to the present disclosure is preferably applied as a layer (for example, an adhesive layer that bonds a substrate to a skin) included in an automobile interior member.

A member including the resin fiber adhesive layer according to the present embodiment (for example, a vehicle interior member) tends to stably exhibit excellent peeling strength (particularly, excellent high-temperature peeling strength).

Here, as an example of the vehicle interior member or the like, a vehicle interior member which includes a polyolefin-based resin foam, a polyolefin-based skin member, and an adhesive layer that bonds the polyolefin-based resin foam to the polyolefin-based skin member and in which the adhesive layer is a resin fiber adhesive layer formed of an aggregate of fibrous olefin-based hot-melt adhesives is conceivable. Since a laminate having such a structure is a laminate in which all of the two layers and the adhesive layer interposed between the two layers are made of a polyolefin-based material, the laminate easily exhibits appropriate adhesive strength, enhances recycling easiness, and is particularly suitable as a vehicle interior member. More specifically, by forming the laminate from a single material, the laminate is more easily recycled than a laminate formed from a plurality of different types of materials. A laminate formed from a plurality of different types of materials, the laminate having difficulty in recycling, is generally discarded (for example, incinerated), but a laminate formed from a single material can be recycled, leading to suppression of an emission amount of carbon dioxide which is one of greenhouse gases.

The polyolefin-based resin foam is, for example, a conventionally known resin foam made of a polyolefin-based resin such as polyethylene, polypropylene, or an ethylene-propylene copolymer.

The polyolefin-based skin member is, for example, a conventionally known sheet-like member made of a polyolefin-based resin such as polyethylene, polypropylene, or an ethylene-propylene copolymer, a thermoplastic elastomer containing a polyolefin-based resin, or the like.

Examples of the olefin-based hot-melt adhesive include those containing at least polyolefin among the hot-melt adhesives according to the present disclosure.

### <<<<Method for manufacturing resin fiber adhesive layer>>>

The resin fiber adhesive layer can be manufactured by various methods. Hereinafter, a method for manufacturing a resin fiber adhesive layer (or a method for manufacturing a member including a resin fiber adhesive layer) will be described.

### <<<First embodiment>>>

A first embodiment of the method for manufacturing a resin fiber adhesive layer (or a method for manufacturing a member including a resin fiber adhesive layer) is an example of a case of spray application using the above-described hot-melt adhesive.

In the present embodiment, first, the hot-melt adhesive is held in a molten state (melting step). A holding temperature or the like of the hot-melt adhesive needs only to be adjusted such that the hot-melt adhesive has a desired melt viscosity in consideration of the type of hot-melt adhesive to be used, a method of spray application, and the like.

Next, the molten hot-melt adhesive is spray-applied (directly) to at least one of surfaces of a bonding target (substrate) so as to have a desired application amount (application step). As a spraying method, a known method, for example, curtain spray, omega spray, spiral spray, or summit spray can be applied. Specific application conditions (spraying method to be used, pressure conditions, and the like) need only to be performed such that the resin fiber adhesive layer has a desired structure (fiber diameter and density). Note that the application step may be performed a plurality of times to adjust a basis weight of the resin fiber adhesive layer.

The hot-melt adhesive discharged from a spray portion reaches a bonding member while waving or being sprayed, and forms a fiber layer in which fibers are arranged in a random direction. The spray portion is usually configured by a plurality of nozzles being arranged in order to improve an application area in one application step. The number of nozzles in the spray portion and the size of the spray portion can be appropriately designed. Note that when a width between the farthest nozzles of the spray portion is 150 mm or less, workability is improved, which is preferable.

As described above, the resin fiber adhesive layer is formed.

Here, when it is desired to bond two members to each other via the resin fiber adhesive layer, a lamination step and a solidification step are further performed.

Specifically, after the resin fiber adhesive layer is formed on the substrate by performing the application step, against the resin fiber adhesive layer formed on the substrate, the other bonding target surface is pressed, and this state is maintained (lamination step). In other words, a bonding member is laminated on the resin fiber adhesive layer formed on the substrate, and the bonding member is pressed.

Next, the hot-melt adhesive is cooled and solidified (solidification step).

As described above, a laminate in which two members are fixed to each other via the resin fiber adhesive layer is obtained.

The solidification step is usually preferably performed during a period in which the resin fiber adhesive layer is not completely solidified (for example, within an open time of the hot-melt adhesive). Note that the open time of the hot-melt adhesive may be extended by a method such as increasing an environmental temperature.

Prior to the application step, the bonding target surface may be subjected to a known surface treatment.

As described above, the hot-melt adhesive can be preferably applied to spray application. Therefore, by forming the resin fiber adhesive layer by spray-applying the above-described hot-melt adhesive, a laminate excellent in adhesive strength and the like is easily obtained.

### <<<Second embodiment>>>

A second embodiment of the method for manufacturing a resin fiber adhesive layer (or a method for manufacturing a member including a resin fiber adhesive layer) is an example of a case of manufacturing an automobile interior member using an olefin-based hot-melt adhesive which is a hot-melt adhesive containing polyolefin.

In the present embodiment, a step of forming a resin fiber adhesive layer by directly spray-applying a hot-melt adhesive onto a substrate is included.

As a method of spray application, a method similar to the application step described above can be performed.

Also in the present embodiment, the melting step, the solidifying step, and the like described above are performed as necessary.

A substrate and a bonding member are not particularly limited. Structures of the substrate and the bonding member can be appropriately changed according to a structure of an automobile interior member to be applied. A material of the substrate is, for example, polyolefin-based (preferably, polypropylene). A material of the bonding member is, for example, real leather, artificial leather, or a fabric material.

Here, the olefin-based hot-melt adhesive preferably contains an acid-modified polypropylene. In other words, the hot-melt adhesive preferably contains a polyolefin and an acid-modified polypropylene. More specifically, the olefin-based hot-melt adhesive preferably uses the above-described hot-melt adhesive.

Table 1 summarizes a comparison among spray application using a hot-melt adhesive (particularly, an olefin-based hot-melt adhesive), spray application using a solvent-based adhesive, and roll application using a hot-melt adhesive (particularly, an olefin-based hot-melt adhesive).

**[Table 1]**

| Item | Ex.1 | Ex.2 | Ex.2 |
|---|---|---|---|
| Type of adhesive | Hot-melt (olefin-based) | Solvent-based | Hot-melt (olefin-based) |
| Application method | Spray | Spray | Roll |
| Form of adhesive | Fiber form | Fiber form | Film form |
| Loss ratio | 0.10% | 70-80% (Solid component 0-30%) | 10-20% (Outer trim loss content) |
| Drying time | Not required | 150s | Not required |
| Cycle time (application to bonding) | 60~80s | 200~220s | ~60s *Precoating is required separately |
| Safety | ○ | × | ○ |
| Automatic application | ○ | × (Explosion-proof is required) | ○ |

As presented in Table 1, since the hot-melt adhesive usually does not contain a solvent, a loss ratio thereof is lower than that of the solvent-based adhesive. In addition, the hot-melt adhesive does not require a drying time, but the solvent-based adhesive requires a predetermined drying time (for example, 150 seconds). Therefore, by using the hot-melt adhesive, a cycle time (a time from application of the adhesive to bonding) can be shortened. Furthermore, while use of the hot-melt adhesive has high safety in that flammability or the like of a solvent does not occur, use of the solvent-based adhesive may require explosion-proof equipment in order to enhance safety. In addition, in a case of forming an adhesive layer by directly spray-applying the hot-melt adhesive to a substrate, a loss ratio is lower than that in a case of forming an adhesive layer by laminating an olefin-based hot-melt adhesive in a film form, and precoating or the like is not required, and therefore an operation process can be simplified.

As described above, in the second embodiment, the hot-melt adhesive is spray-applied to form the resin fiber adhesive layer, and the layer is used as an adhesive layer. As described above, the method for manufacturing an automobile interior member according to the second embodiment is suitable for a mode in which application is automated using an automatically controlled apparatus (so-called robot) from a viewpoint of excellent safety and the like unlike a method using a general adhesive. In addition, in the second embodiment, since a step of drying a solvent in a heating furnace is unnecessary and a loss ratio is small, it is suitable for a manufacturing method for mass-producing automobile interior parts using an automatically controlled apparatus.

In other words, the method for manufacturing an automobile interior member according to the second embodiment is preferably performed as a manufacturing method including a step of forming a resin fiber adhesive layer by directly spray-applying an olefin hot-melt adhesive onto a substrate by an automatically controlled application apparatus.

In particular, according to the above-described hot-melt adhesive, adjustment of a solidification time (extension of a solidification time) and high adhesiveness at normal temperature are easily exhibited, and therefore even in a bonding step using an automatically controlled application apparatus, high adhesiveness can be easily and stably exhibited.

Here, Fig. 1 illustrates a conceptual diagram and a block diagram according to an example of an automatically controlled application apparatus. Hereinafter, an automatically controlled application apparatus will be described mainly with reference to Fig. 1.

Examples of the automatically controlled application apparatus include an application apparatus having a spray portion (for example, a spray head illustrated in Fig. 1) capable of spraying a hot-melt adhesive and a position adjustment portion (for example, an arm illustrated in Fig. 1) that adjusts the position and direction of the spray portion.

Although not illustrated in Fig. 1, the application apparatus usually includes a spray amount adjustment means (pressure adjustment means or the like) that adjusts the amount (spray amount) of the hot-melt adhesive sprayed from the spray portion. The spray portion may be configured to be detachable/replaceable.

In addition, the application apparatus may include a hot-melt adhesive storage portion (for example, a tank) that stores the hot-melt adhesive to be fed to the spray portion, a molten state adjustment portion (for example, a temperature adjustment means or a kneading means) that controls a molten state of the hot-melt adhesive in the hot-melt adhesive storage portion, a flow path portion serving as a flow path through which the hot-melt adhesive is fed from the hot-melt adhesive storage portion to the spray portion, an error detection portion that detects an application state by a known means such as image recognition, a communication portion for communicating with the outside of the application apparatus, and the like.

The application apparatus includes a control portion. These components in the application apparatus are operated according to an electric signal transmitted from the control portion.

The control portion includes, for example, a storage device that stores information related to the application step, a position adjustment portion control device that controls an operation of the position adjustment portion on the basis of the information stored in the storage device, and a spray amount adjustment portion control device that controls an operation of the spray amount adjustment portion on the basis of the information stored in the storage device. The storage device stores information related to application conditions (the shape of a substrate, an application range, a moving speed of the spray portion, and information on the spray portion (for example, information on a nozzle shape), a spray amount of the hot-melt adhesive, the number of times of application repetition, environmental information, and the like).

The control portion may include an information input device, an arithmetic device, and the like. The information input device is, for example, an input terminal for causing the storage device to store information and the like related to the application condition described above. The arithmetic device is, for example, a device capable of calculating an appropriate application condition on the basis of information stored in the storage device.

At least some functions of the control portion may be incorporated in a position (for example, a management room or the like) where the control portion is isolated from the application apparatus via the communication portion or the like.

The application apparatus may be controlled to change an application amount of the hot-melt adhesive according to the shape of a bonding portion or the like. For example, in a case where the application amount of the hot-melt adhesive per unit time is substantially constant, the application apparatus may be controlled to increase an application speed and to decrease the application amount when a bonding portion is smooth, and to decrease the application speed and to increase the application amount when the bonding portion has a complicated shape (has an uneven shape or a curved surface).

Note that, in the second embodiment, an automatically controlled device may be included in addition to the application apparatus. Specifically, examples of the automatically controlled apparatus other than the application apparatus include an apparatus that automatically moves a substrate and a bonding member (an apparatus that feeds a substrate to an application position, an apparatus that feeds a laminate that has been subjected to an application step to a subsequent step, an apparatus that automatically disposes a bonding member at a predetermined position, and the like).

Note that the method for manufacturing a resin fiber adhesive layer using such an automatically controlled application apparatus (or a method for manufacturing a member including a resin fiber adhesive layer) is not limited to manufacture of an automobile interior member, and is also applicable to manufacture of other members.

### Examples

Hereinafter, the hot-melt adhesive composition of the present invention will be specifically described with reference to Examples, but the present invention is not limited thereto.

### <<Manufacture of hot-melt adhesive composition>>

As shown in Tables 2 and 3, raw materials were prepared and put into a mixer and kneaded at 180°C for 20 minutes to obtain a hot-melt adhesive composition according to each Example.

### <<Analysis/Evaluation>>

### <Melt viscosity and crystallization temperature>

A melt viscosity and a crystallization temperature of the hot-melt adhesive composition were measured according to the methods described above.

### <<Formation of resin fiber adhesive layer>>

A laminate including a resin fiber adhesive layer was manufactured as follows.

A skin made of a fabric or the like and a PP resin are used as adherends.

A skin made of a fabric or the like is used as an application surface.

A molten hot-melt adhesive (180°C) is spray-applied to a skin of 100 × 25 mm square so as to be applied in an amount of 55 g/m² to form a resin fiber adhesive layer.

### <<Analysis/Evaluation>>

### <Peeling strength>

Peeling strength was evaluated as follows. Obtained results are presented in Tables 2 and 3.

The resin fiber adhesive layer is formed according to the method described above and applied, and after a lapse of 30 s or 60 s, the PP resin and the skin are bonded to each other (crimping: 500 g × 10 sec).

The obtained laminate is allowed to stand at 23°C for 24 hours in a constant-temperature and constant-humidity room with a humidity of 50%.

After standing, a peeling test (environmental temperature: 90°C, tensile speed: 200 mm/min) is performed by autograph.

Since each hot-melt adhesive has peeling strength of 0.5 N or more after a lapse of 30 s and after a lapse of 60 s, it is considered that the hot-melt adhesive has practical high-temperature peeling strength to a certain degree, and it is considered that the hot-melt adhesive according to each Example in which the peeling strength after a lapse of 30 s and after a lapse of 60 s is more than 1.0 N stably has excellent high-temperature peeling strength.

### <Effective area>

An effective area was evaluated according to the method described above. Each of the resin fiber adhesive layers of the Examples had an effective application area of 60% or more.

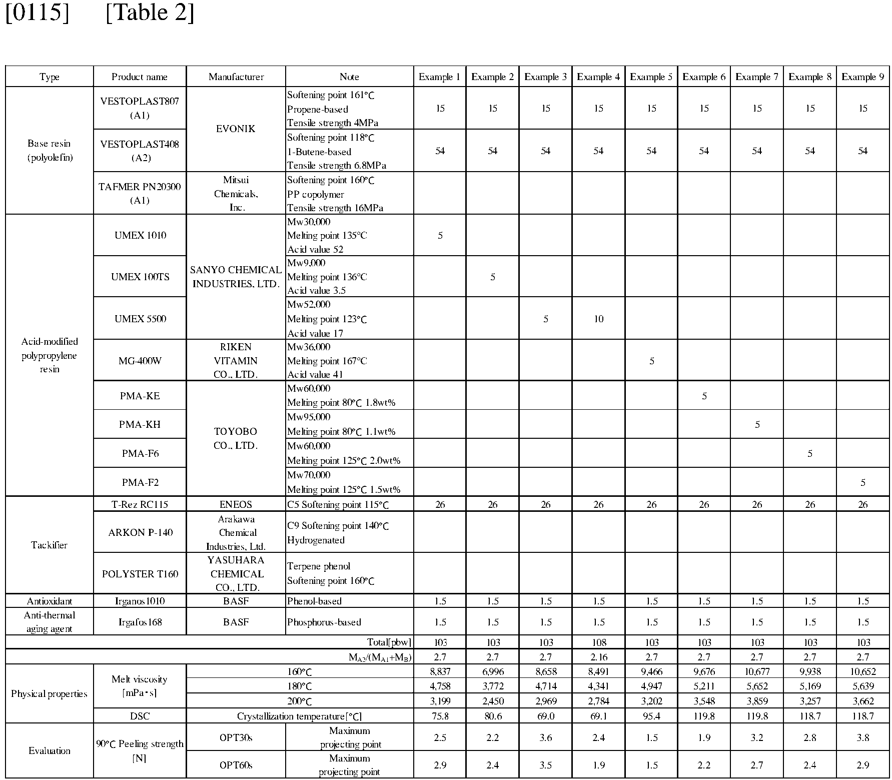

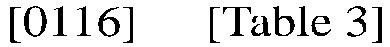

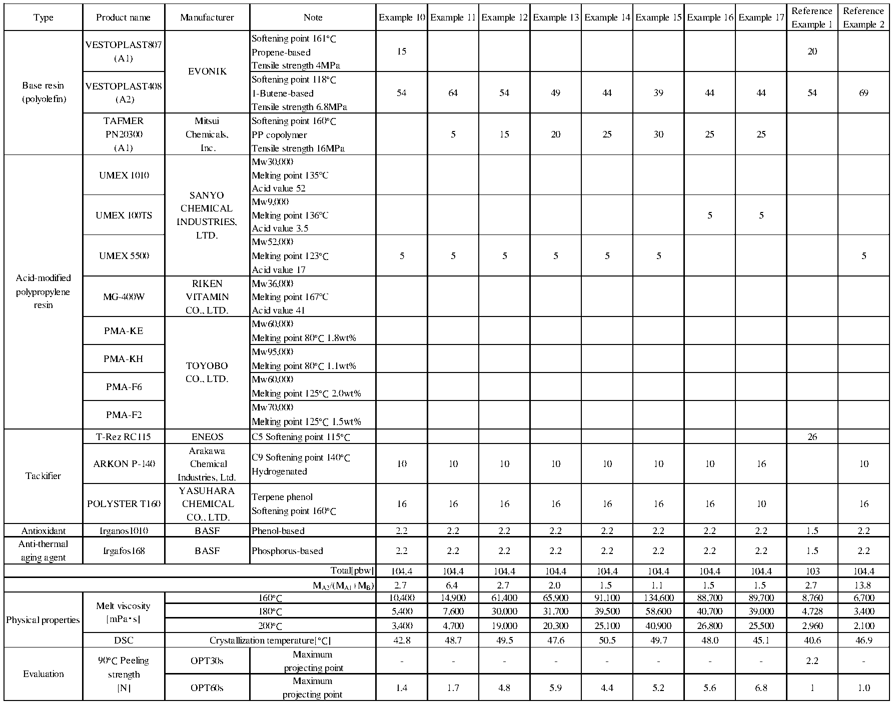

### Industrial Applicability

The layer according to the present invention is preferably used for an interior member in a conveyance such as a vehicle because it can exhibit excellent adhesive strength and the like when used as an adhesive layer in a laminate.

### Cross-Reference to Related Applications

The present application claims priority based on Japanese Patent Application No. 2023-108841 filed with the Japan Patent Office on June 30, 2023, the entire disclosure of which is entirely incorporated herein by reference.

## Claims

1. A layer formed of an aggregate of fibrous hot-melt adhesives, wherein the hot-melt adhesives contain an acid-modified polypropylene.

2. An automobile interior member comprising the layer according to claim 1.

3. A method for manufacturing an automobile interior member, the method comprising a step of forming a resin fiber adhesive layer by directly spray-applying a hot-melt adhesive onto a substrate, wherein
the hot-melt adhesive is an olefin-based hot-melt adhesive containing a polyolefin and an acid-modified polypropylene.

4. A method for manufacturing an automobile interior member, the method comprising a step of forming a resin fiber adhesive layer by directly spray-applying an olefin-based hot-melt adhesive onto a substrate by an automatically controlled application apparatus.
